# EUROPEAN PATENT APPLICATION

(11) **EP 4 488 743 A1**
(43) Date of publication of application: **08.01.2025**
(21) Application number: 22943373.5
(22) Date of filing: 22.07.2022
(51) Int. Cl.: G02B 27/10, G02B 23/00

(54) **FRONT AIMING APPARATUS AND COMBINED AIMING SYSTEM**

(30) Priority: 27.05.2022 CN 202210594334
(71) Applicant: Infiray Technologies Co., Ltd., Hefei, Anhui 230001 (CN)
(72) Inventor: WANG, Jingjing, Hefei National High-tech Industry Development District Anhui 230001 (CN); LIU, Yufang, Hefei National High-tech Industry Development District Anhui 230001 (CN)
(74) Representative: Reiser & Partner Patentanwälte mbB
(86) International application number: PCT/CN2022/107221
(87) International publication number: WO 2023/226182

(57) **Abstract**

Disclosed in the embodiments of the present invention are a combined aiming system and a front aiming apparatus thereof. The front aiming apparatus comprises a shell, an infrared image assembly and an optical waveguide assembly, wherein a visible light channel and an infrared light channel are formed in the shell, and the visible light channel and the infrared light channel are parallel to each other; the infrared image assembly is arranged in the infrared light channel, an infrared light signal in a target scenario is incident to the infrared light channel, and the infrared image assembly receives the infrared light signal, converts same into an electric signal and then sends the electric signal to the optical waveguide assembly; the optical waveguide assembly is located on a transmission path of the visible light signal in the visible light channel; and the optical waveguide assembly is used for transmitting the visible light signal, which is incident to the visible light channel, to a rear end of the visible light channel, and is also used for receiving the electric signal to form a corresponding infrared image, transmitting the infrared image therein in the form of an optical signal, and finally reflecting the infrared image onto the rear end of the visible light channel, so that the infrared image is fused with the visible light signal that is transmitted to the rear end of the visible light channel and then enters human eyes.

## Description

### FIELD OF THE INVENTION

The present invention relates to the technical field of image processing, and in particular to a front sighting device and a combined sighting system.

### DESCRIPTION OF THE RELATED ART

At present, the mainstream sighting devices on the market are mostly white-light or low-light scopes with a single optical path, which can clearly see the detailed features of the target, but are only suitable for use in daytime or in environments with good lighting conditions. The observation conditions are relatively limited, and they cannot work at night or in some extremely harsh environments, such as heavy smoke, heavy fog, haze or in the case of observation through vegetation. Infrared scopes can make up for this deficiency and can be used during the day and night and in extremely harsh environments. However, infrared scopes cannot be used to observe the detailed features of the target. For example, it can be difficult to see the detailed features of a prey when used outdoors, so it may be impossible to accurately distinguish what the animal is.

Scope users may be more concerned about how to capture and aim at the target more quickly and accurately in different environments, which gives space of applying the multispectral imaging technology to the sighting device.

### TECHNICAL PROBLEM

In order to solve the existing technical problems, embodiments of the present invention provide a front sighting device based on optical waveguide and infrared image fusion technology, and a combined sighting system with the front sighting device.

### TECHNICAL SOLUTION

In a first aspect, embodiments of the present application provide a front sighting device, including a housing, and an infrared image assembly and an optical waveguide assembly provided in the housing, the optical waveguide assembly connected to the infrared image assembly. A visible light channel and an infrared light channel are formed in the housing, and the visible light channel and the infrared light channel are parallel to each other. The infrared image assembly is provided in the infrared light channel, when infrared light signals from a target scene enter the infrared light channel, the infrared image assembly is configured to receive the infrared light signals, convert the infrared light signals into electrical signals, and send the electrical signals to the optical waveguide assembly. The optical waveguide assembly is located on a transmission path of visible light signals in the visible light channel; the optical waveguide assembly is configured to, on one hand, transmit the visible light signals incident into the visible light channel to a rear end of the visible light channel and, on the other hand, receive the electrical signals to form a corresponding infrared image, transmit the infrared image in the form of optical signals within the optical waveguide assembly, and finally reflect the infrared image optical signals to the rear end of the visible light channel for fusion with the visible light signals transmitted to the rear end of the visible light channel before entering a human eye.

In some embodiments, the optical waveguide assembly comprises an imaging module, an optical waveguide substrate, and a mirror array provided within the optical waveguide substrate. The imaging module is configured to receive the electrical signals to form the infrared image. The optical waveguide substrate is made of an optical waveguide material, comprising a first surface facing an end of the visible light channel where the visible light is incident and a second surface opposite to the first surface. The mirror array comprises a plurality of beam splitters arranged at intervals between the first surface and the second surface, such that when the infrared image enters the optical waveguide substrate in the form of optical signals, the infrared image optical signals are sequentially transmitted by multiple rounds of total reflection between the first surface and the second surface of the optical waveguide substrate. When each beam splitter receives the light from the total reflection, a portion of the light is reflected out of the optical waveguide substrate and emitted from the second surface, and another portion of the light is transmitted to enter a next round of total reflection, until the last beam splitter reflects all the received light out of the optical waveguide substrate.

In some embodiments, the infrared image assembly comprises an infrared lens, a circuit board, and an infrared detector provided on the circuit board. The infrared lens is configured to collect infrared light signals from the target scene, the infrared detector is configured to receive the infrared light signals and convert them into electrical signals, and the imaging module and the circuit board are connected by a cable.

In some embodiments, the infrared image assembly comprises a control panel, the control panel is provided on the housing, the control panel and the circuit board are connected by a cable, and the control panel is provided with a plurality of control buttons; and/or, the infrared image assembly comprises a battery module, and the battery module and the circuit board are connected by a cable.

In some embodiments, the optical waveguide substrate comprises an optical coupling-in region and an optical coupling-out region, the optical waveguide assembly comprises a reflective display module and a coupling-in unit respectively disposed on opposite sides of the optical coupling-in region. The infrared image optical signals enter the optical coupling-in region of the optical waveguide substrate and are incident to the reflective display module, the infrared image optical signals are phase-modulated by the reflective display module and then emitted to the coupling-in unit, and the infrared image optical signals are coupled to the optical coupling-out region of the optical waveguide substrate by the coupling-in unit.

In some embodiments, the imaging module and the coupling-in unit are located on the same side of the optical waveguide substrate, the projection of the imaging module on the optical coupling-in region is located within the projection of the reflective display module on the optical coupling-in region, and the projection of the imaging module on the optical coupling-in region and the projection of the coupling-in unit on the optical coupling-in region are staggered from each other.

In some embodiments, the mirror array is arranged within the optical coupling-out region, the beam splitters are arranged at intervals along a transmission direction in which the infrared image light signals are transmitted by the multiple rounds of total reflection in the optical coupling-out region, and each beam splitter is obliquely connected between two opposite sides of the optical coupling-out region.

In some embodiments, the housing comprises a first barrel portion and a second barrel portion for forming the visible light channel therein. The first barrel portion is positioned so that the visible light is incident into the visible light channel via the first barrel portion, the optical waveguide assembly is obliquely mounted in the second barrel portion, and the second barrel portion is provided with a protective window at one end away from the first barrel portion.

In some embodiments, the housing comprises an annular flange extending inwards from the junction of the first barrel portion and the second barrel portion, the second barrel portion defines a through hole adjacent to the infrared light channel, the through hole communicates the visible light channel with the infrared light channel, the through hole is provided for a cable connecting the optical waveguide assembly and the infrared image assembly to pass therethrough. The optical waveguide substrate comprises an end adjacent to the through hole and fixed on the annular flange, and another end fixed on a side of the second barrel portion away from the through hole.

In some embodiments, the optical waveguide substrate is at 45 degrees to the visible light optical axis.

In some embodiments, the front sighting device further comprises an adapter, one end of the adapter is connected to the end of the housing away from an end where the visible light is incident, and the other end is provided with an opening for connection to a scope so as to install the front sighting device at a front end of the scope.

In some embodiments, the adapter comprises a fixing end, a connecting end, and an adjustment structure provided on an outer side of the connecting end, and a side wall of the connecting end is provided with a slot extending along the axial direction. The adjustment structure comprises a first engaging part, a second engaging part, and an adjustment member, wherein the first engaging part and the second engaging part are respectively provided at opposite sides of the slot, and the adjustment member is adjustably connected between the first engaging part and the second engaging part, so as to adjust the width of the slot and thereby adjust the inner diameter of the connecting end.

In some embodiments, the front sighting device further includes a shock-absorbing bracket, the shock-absorbing bracket is provided on a side of the housing away from the infrared image assembly, and is configured to install the front sighting device at a front end of a scope.

In some embodiments, the shock-absorbing bracket is detachably provided on the housing, the shock-absorbing bracket is provided with an elastic member, and the elastic deformation direction of the elastic member is the same as the direction of the visible light optical axis.

In a second aspect, a combined sighting system is provided which includes a white-light scope and a front sighting device as described in any of the embodiments above. The front sighting device is mounted in front of the white-light scope, and a white light optical axis of the white-light scope is located on the same straight line as the visible light optical axis of the front sighting device.

### BENEFICIAL EFFECT

The above-mentioned embodiments provide a front sighting device, comprising a housing, and a visible light channel and an infrared light channel formed in the housing. An optical waveguide assembly is provided in the housing, which is connected to an infrared imaging component. When infrared light signals from a target scene enter the infrared light channel, the infrared image assembly converts the infrared light signals into electrical signals, and sends the electrical signals to the optical waveguide assembly. The optical waveguide assembly is located on a transmission path of visible light signals in the visible light channel. The optical waveguide assembly is used to, on one hance, transmit the visible light signals incident into the visible light channel to a rear end of the visible light channel and, one the other hand, receive the electrical signals to obtain a corresponding infrared image, transmit the infrared image in the form of optical signals therein, and finally reflect the infrared image optical signals to the rear end of the visible light channel for fusion with the visible light signals transmitted to the rear end of the visible light channel before entering the human eye. By setting the optical waveguide assembly in the visible light channel, the infrared image is fused with the visible light signals while being transmitted by the optical waveguide assembly, such that the human eye can directly observe the infrared image on the side where the light is emitted from the waveguide assembly. Alternatively, the front sighting device can be assembled on a white-light scope at one end of the front sighting device provided with a protective window to form a combined sighting system, and the front sighting device can be used in cooperation with the white-light scope. With the visible light channel reserved in the front sighting device, and with the optical waveguide assembly being used to transmit the infrared image and realize the dual-light fusion, the front sighting device can provide direct observation for the human eye at the rear end of the visible light channel. This can avoid setting an eyepiece in the front sighting device, thus simplifying the overall structure, and improving the weight balance of the front sighting device. By applying the optical waveguide and infrared image fusion technology to the front sighting device, scene enhancement can be achieved to highlight a target and facilitate discovering more image detail features.

In the above embodiments, the combined sighting system including the front sighting device belongs to the same conception as the corresponding embodiment of the front sighting device, and thus has the same technical effect as the corresponding front sighting device embodiment, which will not be repeated herein.

### BRIEF DESCRIPTION OF THE DRAWINGS

FIG. 1 is an isometric view of a front sighting device in one embodiment;
FIG. 2 is a sectional view of the front sighting device shown in FIG. 1;
FIG. 3 is another sectional view of the front sight shown in FIG. 1, viewed from another angle;
FIG. 4 is a schematic diagram showing the principle of a front sighting device in one embodiment;
FIG. 5 is a structural diagram of an optical waveguide assembly in one embodiment;
FIG. 6 is a structural diagram of a front sighting device in another embodiment; and
FIG. 7 is a structural diagram of a front sighting device in still another embodiment.

### EMBODIMENTS OF THE INVENTION

The following is a further detailed description of the technical solution of the present invention in conjunction with the drawings of the specification and specific embodiments.

Unless otherwise defined, all technical and scientific terms used herein have the same meaning as understood by those skilled in the art of the technology pertaining to the present invention. The terms used in the description of the present invention herein are only intended to describe specific embodiments, not to limit the scope of the present invention. The terminology "and/or" used herein include any and all combinations of one or more of the listed items.

In the description of the present invention, it is necessary to understand that the terms "top", "on", "below", "front", "back", "left", "right", "vertical", "horizontal", "top", "bottom", "inner", "outer", and other directional or positional relationships indicated thereby are based on the directional or positional relationships shown in the drawings, only for the purpose of facilitating the description of the present invention and simplifying the description, rather than indicating or implying that the device or component must have specific orientations, or be constructed and operated in specific orientations, and therefore should not be understood as limiting the present invention. In the description of the present invention, unless otherwise stated, the term "multiple" or "plurality" means two or more.

In the description of the present invention, it should be noted that unless otherwise expressly specified and limited, terms such as "installation", "connection," and "linking" should be understood in a broad sense, for example, they can be fixed connections, detachable connections, or integral connections; they can be directly connected or indirectly connected through an intermediate medium, and can be interconnections within two components. For one skilled in the art, the specific meanings of the above terms in the present invention can be understood under specific circumstances.

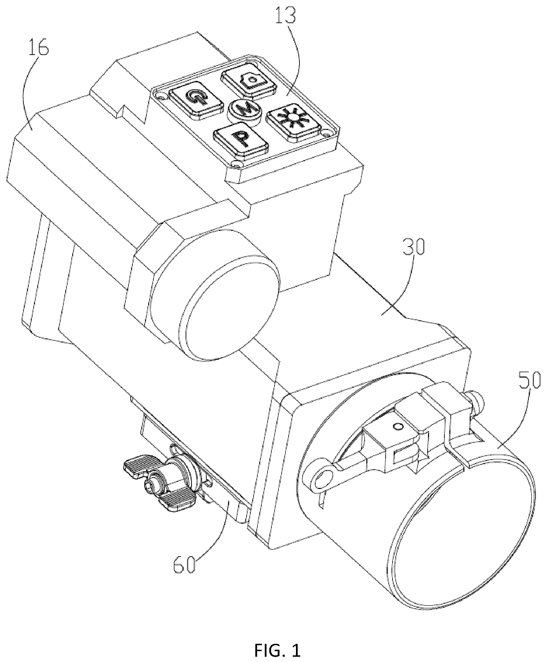

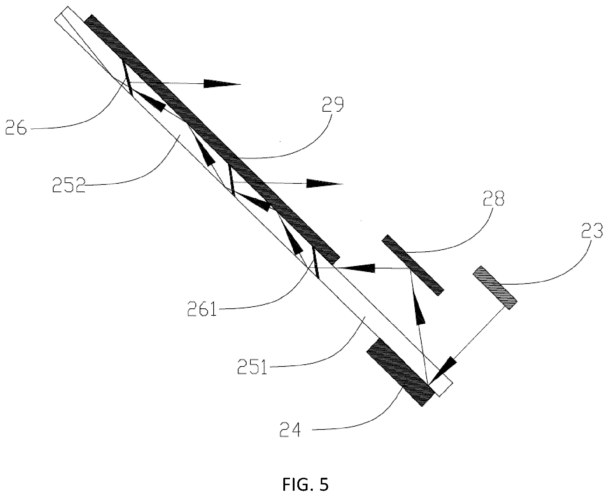

Referring to FIG. 1 to FIG. 5, which are schematic diagrams of a front sighting device 100 in accordance with one embodiment of the present application, the front sighting device 100 includes a housing 30, and an infrared image assembly 10 and an optical waveguide assembly 20 provided in the housing 30, the optical waveguide assembly 20 connected to the infrared image assembly 10. A visible light channel 36 and an infrared light channel 37 are formed in the housing 30, and the visible light channel 36 and the infrared light channel 37 are parallel to each other. The infrared image assembly 10 is provided in the infrared light channel 37, infrared light signals from a target scene are incident into the infrared light channel 37, and the infrared image assembly 10 receives the infrared light signals, converts them into electrical signals, and then sends the electrical signals to the optical waveguide assembly 20. The optical waveguide assembly 20 is located on a transmission path of visible light signals in the visible light channel 36. The optical waveguide assembly 20 is used, on one hand, to transmit the visible light signals incident into the visible light channel 36 to a rear end of the visible light channel 36 and, on the other hand, to receive the electrical signals to form a corresponding infrared image, transmit the infrared image in the form of light signals therein, and finally reflect infrared image light signals to the rear end of the visible light channel 36 for fusion with the visible light signals transmitted to the rear end of the visible light channel 36 before entering the human eye.

In the process of transmitting the infrared image light signals through the optical waveguide assembly 20, after multiple rounds of semi-transmission and semi-reflection by optical elements in the optical waveguide assembly 20, the infrared image optical signals are finally emitted from a side of the optical waveguide assembly 20 facing the rear end of the visible light channel 36. The visible light signals incident into the visible light channel 36 are transmitted through the optical waveguide assembly 20, and the infrared image light signals are fused with the visible light signals at the rear end of the visible light channel 36.

In the front sighting device 100 provided in the above embodiment, the optical waveguide assembly 20 disposed in the visible light channel 36 is used to transmit the infrared image and at the same time realize the fusion of the infrared image light signals and the visible light signals, so that the human eye can directly observe the image from the side where the light is emitted from the optical waveguide assembly 20. The front sighting device 100 can also be assembled on a white-light scope to form a combined sighting system, in which the front sighting device 100 is used in combination with the white-light scope. With the visible light channel reserved in the front sighting device 100, and with the optical waveguide assembly being used to transmit the infrared image and realize the dual-light fusion, the front sighting device 100 can provide direct observation for the human eye at the rear end of the visible light channel 36. This can avoid setting an eyepiece in the front sighting device 100, thus simplifying the overall structure, and improving the weight balance of the front sighting device 100. By applying the optical waveguide and infrared image fusion technology to the front sighting device 100, scene enhancement can be achieved to highlight a target and facilitate discovering more image detail features.

The housing 30 can be an integral structural member that is integrally formed, or alternatively it can be formed by multiple separate structural members connected to each other. The infrared light channel 37 and the visible light channel 36 can be disposed in parallel in an up and down arrangement in the housing 30, and the optical waveguide assembly 20 is arranged in the visible light channel 36. The visible light reflected by a to-be-imaged object in the target scene is incident into the visible light channel 36 of the front sighting device 100, and the visible light entering the visible light channel 36 passes through the optical waveguide assembly 20, and is fused with the infrared image light signals transmitted through the optical waveguide assembly 20 at the rear end of the visible light channel 36. As such, the optical waveguide technology is applied in the front sighting device 100 including both the visible light path and the infrared light path, achieving a dual-light fusion front sighting device that includes the optical waveguide and keeps the visible light channel 36. In the front sighting device 100 of this embodiment, the visible light channel 36 and the infrared light channel 37 are included, and the optical waveguide technology is applied to transmit the infrared image, the visible light entering the visible light channel 36 is transmitted through the optical waveguide assembly 20, and is fused with the infrared image light signals which are transmitted through the optical waveguide assembly 20 and finally reflected to the visible light channel 30. In this way, the coupling efficiency of entrance pupils of the visible light image and the infrared image can be improved, so as to retain more image detail features of each of the visible light image and the infrared image, and integrate the virtual information and the real scene for mutual complementation and mutual enhancement.

In some embodiments, the optical waveguide assembly 20 includes an imaging module 23, an optical waveguide substrate 25, and a mirror array 26 disposed within the optical waveguide substrate 25. The optical waveguide substrate 25 is made of an optical waveguide material, including a first surface facing an end of the visible light channel 36 where the visible light is incident, and a second surface opposite to the first surface. The mirror array 26 includes a plurality of beam splitters 261 arranged at intervals between the first surface and the second surface. The infrared image enters the optical waveguide substrate 25 in the form of optical signals, and the infrared image optical signals are sequentially transmitted between the first surface and the second surface of the optical waveguide substrate 25 by multiple rounds of total reflection. When each beam splitter 261 receives the light from the total reflection, a portion of the light is reflected out of the optical waveguide substrate 25 and emitted from the second surface, and another portion of the light is transmitted to enter the next round of total reflection until the last beam splitter 261 reflects all the received light out of the optical waveguide substrate 25. During one round of total reflection of the infrared image optical signals between the first surface and the second surface of the optical waveguide substrate 25, the light participating in that round of total reflection is incident to a corresponding one of the beam splitters 261, a portion of the light is reflected out of the optical waveguide substrate 25 by the corresponding beam splitter 261, and another portion of the light passes through this corresponding beam splitter 261 to enter a next round of total reflection. After multiple rounds of total reflection, the infrared image optical signals are totally reflected out of the optical waveguide substrate 25 by the mirror array 26, and are emitted from the second surface of the optical waveguide substrate 25. The second surface of the optical waveguide substrate 25 faces the rear end of the visible light channel 36, and can serve as a side for human eye observation, so that the human eye can directly observe the infrared image transmitted by the optical waveguide substrate 25 and fused with the visible light signals at the rear end of the visible light channel 36.

The optical waveguide substrate 25 is a medium that guides the propagation of light waves therein, and the optical waveguide material can be an optically transparent medium, such as quartz glass. Multiple beam splitters 261 are internally arranged between the first surface and the second surface of the optical waveguide substrate 25, along the direction of light wave transmission in the form of the multiple rounds of total reflection in the optical waveguide substrate 25. Each beam splitter 261 is obliquely located between the first surface and the second surface. During the transmission of the light wave in the optical waveguide substrate 25, when each beam splitter 261 receives the light, a portion of the light passes through the corresponding beam splitter 261 and enters the next round of total reflection, and the other portion of the light is reflected by the corresponding beam splitter 261 and emitted outwards from an interior of the optical waveguide substrate 25. The light propagates along the beam splitters 261 one by one and the reflection-transmission process repeats until the remaining light reaches the last beam splitter 261 where the remaining light is totally reflected by the last beam splitter 261 out of the optical waveguide substrate 25.

In the above embodiments, the infrared image assembly 10 collects the infrared light signals from the target scene and converts them into electrical signals, and then sends the electrical signals to the optical waveguide assembly 20. After imaging with the imaging module 23 of the optical waveguide assembly 20 to form an infrared image, the infrared image light signals are transmitted by utilizing the total reflection principle of the optical waveguide assembly. During the transmission of the infrared image light signals through the optical waveguide, all the infrared image light signals are emitted from the second surface of the optical waveguide substrate 25, by means of the semi-transmission and semi-reflection characteristics of each beam splitter 261 in the mirror array 26. By utilizing the optical waveguide to transmit the infrared image, the infrared image light signals are finally reflected to the rear end of the visible light channel 36. The human eye can directly observe the infrared image from the side of the second surface of the optical waveguide substrate 25. Alternatively, the front sighting device 100 can be assembled on a front end of the white-light scope 200 to obtain a combined sighting system, in which the front sighting device 100 is used in conjunction with the white-light scope 200.

In some embodiments, the infrared image assembly 10 includes an infrared lens 11 and an image processing module 12. In the infrared image assembly 10, the infrared lens 11 and the image processing module 12 are arranged along the direction of an infrared light optical axis, and the infrared lens 11 and the image processing module 12 constitute an infrared light path. The image processing module 12 includes a circuit board 122 and an infrared detector 121 disposed on the circuit board 122. The infrared lens 11 is used to collect the infrared light signals from the target scene, and the infrared detector 121 is used to receive the infrared light signals and convert them into electrical signals. The imaging module 23 and the circuit board 122 are connected by a cable, and the circuit board 122 is provided with a connector for plug-in connection with the cable. To ease distinguishing and description, the cable and connector connected to the imaging module 23 and the circuit board 122 in this embodiment of the application will be uniformly referred to as a first cable 141 and a first connector in the following description. The infrared light channel 37 can be configured to have an approximately rectangular cross section, and four corners of the infrared detector 121 can be respectively connected to the housing 30 by fixing members 123. For example, the fixing members 123 can be screws, and the four corners of the infrared detector 121 are connected to the housing 30 by the screws. The infrared lens 11 includes an infrared objective lens arranged in front of the infrared detector 121, and the infrared objective lens receives the incident light from the scene and projects the incident light onto the infrared detector 121. The infrared detector 121 is disposed on the circuit board 122 and is electrically connected to the imaging module 23 of the optical waveguide assembly 20 by the first cable 141. By means of the plug-in connection between the first cable 141 and the first connector to connect the infrared image assembly 10 and the optical waveguide assembly 20, the detachable assembly of the infrared image assembly 10 on the front sighting device 100 is facilitated.

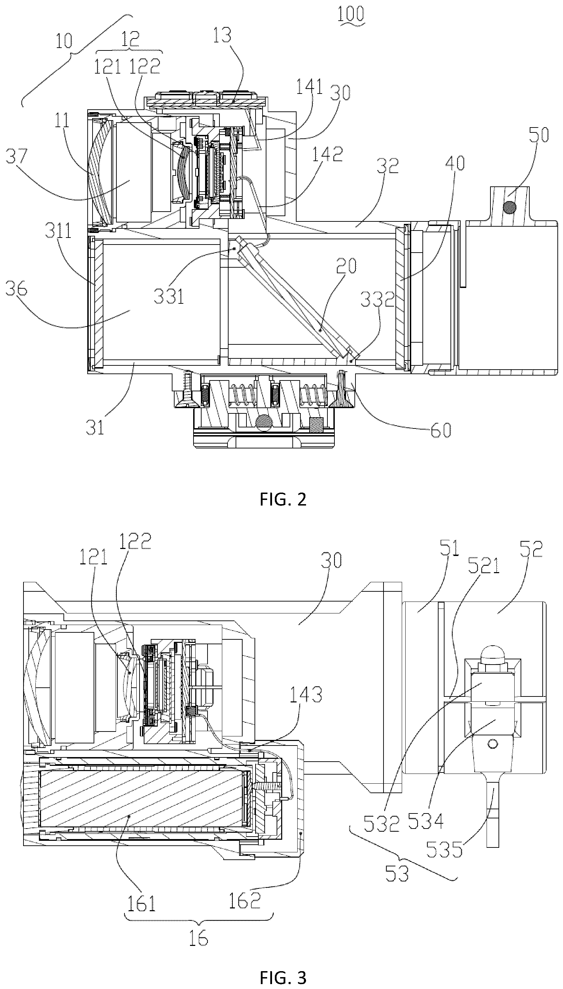

Optionally, the infrared image assembly 10 can further include a control panel 13 provided on the housing 30, the control panel 13 and the circuit board 122 are connected by a cable, and a plurality of control buttons is provided on the control panel 13. The control panel 13 is provided on a side of the housing 30 away from the visible light channel 36. To ease distinguishing and description, the cable and the connector connected to the control panel 13 and the circuit board 122 in this embodiment of the application will be uniformly referred to as a second cable 142 and a second connector in the following description. The control panel 13 includes a button circuit board provided in the infrared light channel 37, and the control buttons are mechanical buttons provided on the button circuit board. A plurality of button holes corresponding to the plurality of control buttons is formed in the housing 30, the control buttons are electrically connected to the button circuit board and protrude beyond the housing 30 through the button holes, and users can realize external data input and manipulation of the front sighting device 100 by operating the control buttons. The material of the mechanical buttons can be silicone rubber, and the silicone rubber buttons can be connected to the housing 30 by screws, and are used to operate the button circuit board to manipulate the entire front sighting device 100. In an optional embodiment, the manipulation of the front sighting device 100 by using the control buttons includes selecting different image enhancement modes, turning on or off the function of the infrared image assembly 10, adjusting the position of the infrared image in the imaging area, and the like. For example, the image enhancement modes of the front sighting device can include a thermal image pseudo-color enhancement mode and a thermal image contour enhancement mode. Users can select different image enhancement modes through the mode button(s) to adapt to the image enhancement processing requirements in different scenes, so as to better highlight the target and achieve faster and more accurate target capture and aiming. Adjusting the position of the infrared image in an OLED (Organic Light-Emitting Diode) imaging area can include adjusting the horizontal and vertical movements of the image display area. When selecting and configuring the OLED, a displacement amount in units of pixels is set within a certain range to allow the horizontal or vertical movement of the OLED display area to calibrate the optical axis error. Adjusting the position of the infrared image in the OLED imaging area can also include calibrating an image height of the infrared image. When selecting and configuring the OLED, a scaling amount in units of pixels is set within a certain range to allow the OLED display area to be scaled with the display center as the center of a circle, so that the image height of the infrared image can match the image height of the visible light image. With reference to FIG. 2, taking the infrared light channel 37 and the visible light channel 36 arranged along the height direction of the front sighting device 100 as an example, the infrared light channel 37 and the visible light channel 36 are disposed in an up and down arrangement, and the control panel 13 is provided on a top side of the housing 30 to ease operation by users. Optionally, the control panel 13 can also be implemented as a touch-screen panel, and the control buttons are virtual buttons displayed on the touch-screen panel.

Optionally, the infrared image assembly 10 can further include a battery module 16, and the battery module 16 and the circuit board 122 are connected by a cable. The battery module 16 is arranged side by side with the infrared optical channel 37, and the arrangement direction of the infrared optical channel 37 and the battery module 16 is perpendicular to the arrangement direction of the infrared optical channel 37 and the visible light channel 36. To ease distinguishing and description, the cable and connector connected to the battery module 16 and the circuit board 122 in this embodiment of the present application will be uniformly referred to as a third cable 143 and a third connector in the following description. The battery module 16 is detachably mounted on the housing 30 and is arranged side by side with the infrared optical channel 37, which can optimize the overall structural layout of the front sighting device. The battery module 16 is connected through the third cable 143 to the circuit board 122 located in the infrared optical channel 37, for providing working power to the infrared image assembly 10 and the optical waveguide assembly 20, which is convenient for users to disassemble and replace the battery module 16 according to actual needs. The battery module 16 comprises a battery pack 161 and a battery cover 162 that can cover an outer side of the battery pack 161, the battery cover 162 is formed with a receiving cavity that matches the shape of the battery pack 161, and the housing 30 is provided with a thread for engagement with the battery cover 162. In assembly of the battery module 16 on the front sighting device 100, the battery module 16 is first connected to the circuit board 122 by plug-in connection between the third cable 143 and the third connector, and then the battery cover 162 is placed to cover the battery pack 161 and screwed to the housing 30, thereby fixing the battery module 16 on the housing 30. Optionally, a sealing ring is further provided at a connection area between the battery cover and the housing 30, and the battery module 16 and the housing 30 are sealed therebetween by the sealing ring.

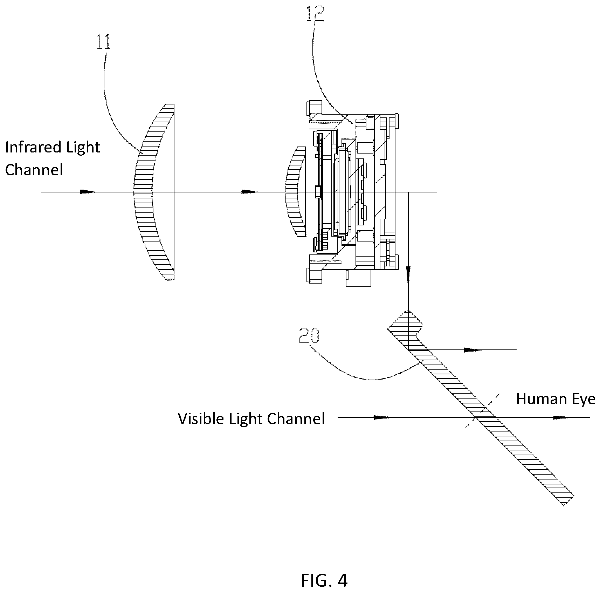

Referring to FIG. 4, in some embodiments, the optical waveguide substrate 25 includes an optical coupling-in region 251 and an optical coupling-out region 252, and the optical waveguide assembly 20 further includes a reflective display module 24 and a coupling-in unit 28 respectively disposed on opposite sides of the optical coupling-in region 251. The infrared image optical signals enter the optical coupling-in region 251 of the optical waveguide substrate 25 and are incident to the reflective display module 24. After being phase-modulated by the reflective display module 24, the infrared image optical signals are emitted to the coupling-in unit 28, and the infrared image optical signals are coupled into the optical coupling-out region 252 of the optical waveguide substrate 25 by the coupling-in unit 28. The imaging module 23 is located on one side of the optical waveguide substrate 25, and the reflective display module 24 is attached to an opposite side of the optical waveguide substrate 25. In this embodiment, the imaging module 23 is an OLED module, which receives the infrared image electrical signals sent by the image processing module 12 to form and display a corresponding infrared image. The infrared image displayed by the OLED module acts as a light source for the optical waveguide assembly 20, and is emitted in the form of light signals towards the reflective display module 24 on the opposite side of the optical coupling-in region 251 of the optical waveguide substrate 25. The reflective display module 24 can optionally be an LCOS (Liquid Crystal on Silicon) micro-display chip, which reflects all infrared image light signals to the coupling-in unit 28, and the coupling-in unit 28 in turn reflects the infrared image light signals to the optical coupling-out region 252 of the optical waveguide substrate 25 at a preset incident angle. A phase modulation unit for modulating incident light is provided in the reflective display module 24, and the infrared image light signals modulated by the phase modulation unit are then emitted to the coupling-in unit 28 of the optical waveguide assembly 20.

Optionally, the imaging module 23 and the coupling-in unit 28 are located on the same side of the optical waveguide substrate 25, the projection of the imaging module 23 on the optical coupling-in region 251 is located within the projection of the reflective display module 24 on the optical coupling-in region 251, and the projection of the imaging module 23 on the optical coupling-in region 251 and the projection of the coupling-in unit 28 on the optical coupling-in region 251 are staggered from each other. The projection of the imaging module 23 on the optical coupling-in region 251 and the projection of the reflective display module 24 on the optical coupling-in region 251 overlap each other, so that the infrared image light signals from the imaging module 23 can be incident on the reflective display module 24 in a substantially parallel direction. With the coupling-in unit 28 and the imaging module 23 located on the same side of the optical waveguide substrate 25, and the projections of the coupling-in unit 28 and the imaging module 23 on the optical coupling-in region 251 staggered from each other, the coupling-in unit 28 can be prevented from blocking the infrared image light signals of the imaging module 23 while being incident on the reflective display module 24, and the infrared image light signals can be incident on the coupling-in unit 28 after being phase-modulated and reflected by the reflective display module 24. Optionally, the projections of the imaging module 23 and the coupling-in unit 28 on the optical coupling-in region 251 are contiguous to each other, and the sum of the widths of the imaging module 23 and the coupling-in unit 28 is substantially the same as the width of the optical coupling-in region 251, so that when the infrared image displayed on the imaging module 23 is coupled to the optical coupling-out region 252 of the optical waveguide substrate 25 in the form of light signals after traveling along the reflective display module 24 and the coupling-in unit 28, the loss of the infrared image light signals during transmission through the optical waveguide assembly 20 can be avoided.

Optionally, the mirror array 26 is arranged in the optical coupling-out region 252, and the beam splitters 261 are arranged at intervals along the direction in which the infrared image optical signals are transmitted in the optical coupling-out region 252 by multiple rounds of total reflection, and each of the beam splitters 261 is obliquely connected between the two opposite sides of the optical coupling-out region 252. In this embodiment, the two opposite sides of the optical waveguide substrate 25 are a first surface and a second surface of the optical waveguide substrate 25, respectively, wherein the side where the imaging module 23 and the coupling-in unit 28 are located is the side of the first surface of the optical waveguide substrate 25, and the side where the reflective display module 24 is located is the side of the second surface of the optical waveguide substrate 25. Each beam splitter 261 is obliquely connected between the first surface and the second surface of the optical coupling-out region 252, and is a semi-transmissive and semi-reflective mirror. The oblique angle of each beam splitter 261 is the same, and the distance between two adjacent beam splitters 261 is approximately equal to a distance over which the infrared image optical signal transmitting through a former one of the two adjacent beam splitter 261 undergoes one round of total reflection between the first surface and the second surface, so that the optical path of the optical signal transmitted in the optical waveguide substrate 25 can be made simpler, and the loss of the optical signal during transmission can be avoided. The beam splitters 261 are arranged at intervals along the direction in which the optical signals transmit in the optical waveguide substrate 25 by multiple rounds of total reflection. To ease description, the beam splitter 261 arranged as the first one is named a near-end beam splitter, the beam splitter 261 arranged at the end is named a far-end beam splitter, and the beam splitters located between the near-end beam splitter and the far-end beam splitter are named intermediate beam splitters. During transmission in the optical waveguide substrate 25, when the optical signals propagate along the near-end beam splitter and the intermediate beam splitters in sequence, the near-end beam splitter and the intermediate beam splitters reflect a portion of the light out of the optical waveguide substrate 25 and emit that portion of the light from the second surface, and the remaining light penetrates through the respective beam splitters and enters the next round of total reflection, until the remaining light reaches the far-end beam splitter, where the far-end beam splitter reflects all the remaining incident light out of the optical waveguide substrate 25. A protective glass 29 is attached to the side of the optical coupling-out region 252 from which the light is emitted out of the optical waveguide substrate 25. In this embodiment, the protective glass 29 is attached to the second surface of the optical coupling-out region 252, and a protective window 40 can be arranged at the end of the visible light channel 36 of the front sighting device 100. In this way, the human eye can directly observe the image formed by the infrared objective lens and then transmitted by the optical waveguide assembly at the end of the visible light channel 36. Optionally, the optical waveguide substrate 25 is obliquely arranged in the visible light channel 36 in such a manner that the optical signals reflected out of the optical waveguide substrate 25 by the beam splitter 261 are emitted in a direction substantially parallel to the visible light optical axis towards the observation position of the human eye. Optionally, the oblique angle of each beam splitter 261 relative to the first surface and the second surface is 45 degrees, so as to simplify the design of the optical path of the optical signals transmitted in the optical waveguide substrate 25.

In some embodiments, the housing 30 is integrally formed as a one-piece structural member. The housing 30 comprises a first barrel portion 31 and a second barrel portion 32 for forming the visible light channel 36 therein. The visible light is incident into the first barrel portion 31 from the outside environment. The optical waveguide assembly 20 is obliquely mounted in the second barrel portion 32. The protective window 40 is disposed at an end of the second barrel portion 32 away from the first barrel portion 31. The first barrel portion 31 and the second barrel portion 32 are in communication with each other. In this embodiment, the cross sections of the first barrel portion 31 and the second barrel portion 32 are in the shape of rectangular rings, and the visible light channel 36 is a rectangular channel formed within the first barrel portion 31 and the second barrel portion 32. The first barrel portion 31 is provided with an incident light window 311 at an end where the visible light is incident. With the optical waveguide assembly 20 obliquely disposed in the second barrel portion, when the visible light is incident into the first barrel portion 31 and passes through the second barrel portion 32, it passes through the optical waveguide substrate 25 obliquely disposed in the second barrel portion 32 and is fused with the infrared image transmitted through the optical waveguide substrate 25.

Optionally, the housing 30 further includes an annular flange 33 extending inward from the junction of the first barrel portion 31 and the second barrel portion 32. The second barrel portion 32 is provided with a through hole near the infrared light channel 37, the through hole communicating the visible light channel 36 with the infrared light channel 37 and being provided for the first cable 141 connecting the optical waveguide assembly 20 and the infrared image assembly 10 to pass therethrough. In this embodiment, the first cable 141 is specifically used to connect the imaging module 23 and the image processing module 12. The optical waveguide assembly 20 is disposed in the second barrel portion 32 and is connected to the infrared image assembly 10 disposed in the infrared light channel 37 via the first cable 141 that passes through the through hole and is plug-connected with the infrared image assembly 10. One end of the optical waveguide substrate 25 is adjacent to the through hole and is fixed to the annular flange 33, and the other end is fixed to the side of the second barrel portion 32 away from the through hole. A portion of the annular flange 33 connected to the optical waveguide substrate 25 is provided with a resisting portion 331 matching the shape of an edge of the optical waveguide substrate 25, and an inner surface of the side of the second barrel portion 32 away from the through hole can also be provided with a blocking portion 332 matching the shape of the edge of the optical waveguide substrate 25 at an area of the second barrel portion 32 that is connected to the optical waveguide substrate 25. The upper and lower ends of the optical waveguide substrate 25 are respectively fixed to the resisting portion 331 on the annular flange 33 and the blocking portion 332 on the second barrel portion 32, which is conducive to improving the compactness of structure of the front sighting device 100 and can simplify the assembly of the optical waveguide substrate 25.

The optical waveguide substrate 25 is obliquely mounted in the second barrel portion 32, and the projection of the optical waveguide substrate 25 on a plane perpendicular to the visible light optical axis is approximately equal to the size of the cross section of the visible light channel 36. In this way, all the visible light entering the visible light channel 36 is emitted in the direction of the protective window 40 after passing through the optical waveguide substrate 25, and the visible light in the visible light channel 36 can be fused with the infrared image transmitted through the optical waveguide substrate 25. Optionally, the optical waveguide substrate 25 is at 45 degrees to the visible light optical axis, and the center of the optical waveguide substrate 25 coincides with the center of the visible light channel 36, which can simplify the determination of the field of view of the infrared objective lens and the optical waveguide assembly 20, ensure that the angles of the field of view of the two are equal, and meet the requirement that the visual magnification of the front sighting device 100 is 1.

In some embodiments, the front sighting device 100 further includes an adapter 50. One end of the adapter 50 is connected to the end of the housing 30 away from the end where the visible light is incident, and the other end is provided with an opening for connection to a scope, so as to mount the front sighting device 100 at a front end of the scope. The adapter 50 includes a fixing end 51, a connecting end 52, and an adjustment structure 53 provided on an outer side of the connecting end 52. A side wall of the connecting end 52 is provided with a slot 521 extending along the axial direction. The adjustment structure 53 includes a first engaging part 532, a second engaging part 534, and an adjustment member 535. The first engaging part 532 and the second engaging part 534 are respectively disposed at opposite sides of the slot 521. The adjustment member 535 is adjustably connected between the first engaging part 532 and the second engaging part 534, and is used to adjust the width of the slot 521, thereby adjusting the inner diameter of the connecting end 52. The connecting end 52 of the adapter 50 is formed to be ring-shaped with the slot 521, and the adjustment structure 53 is provided to adjust the inner diameter of the connecting end 52. The adapter 50 is connected to the end of the second barrel portion 32 through the fixing end 51, and is connected to the scope through the connecting end 52. The size of the connecting end 52 is adjustable, so that the front sighting device 100 can be fixed to different models of scopes through the adapter 50, and the front sighting device 100 can be used in combination with scopes of different calibers. The adapter 50 is provided at the end of the visible light channel 36 away from the end where the visible light is incident, the front sighting device 100 is connected through the adapter 50 to the end of the scope where an objective lens is disposed, and the light emitted from the front sighting device 100 through the protective window 40 can be directly used as an incident light source for imaging with the objective lens of the scope.

In some embodiments, the front sighting device 100 further includes a shock-absorbing bracket 60, which is provided on a side of the housing 30 away from the infrared image assembly 10, for mounting the front sighting device at the front end of the cope. The shock-absorbing bracket 60 is provided with an elastic member, and the elastic deformation direction of the elastic member is the same as the visible light optical axis direction. In this embodiment, the infrared image assembly 10 is provided on the top side of the housing 30, and the shock-absorbing bracket 60 is provided on a bottom side of the housing 30. In connecting and fixing the front sighting device 100 to the scope through the shock-absorbing bracket 60, the front sighting device 100 can be connected to a standardized connecting piece through the shock-absorbing bracket 60, and the scope can be connected to the standardized connecting piece. When the front sighting device 100 and the sighting telescope are both connected to the standardized connecting piece, the protective window 40 of the front sighting device 100 is aligned with the eyepiece of the scope, and the visible light optical axis of the front sighting device 100 is in the same straight line as the white light optical axis of the scope. The elastic member can provide space for elastic deformation, thereby improving the overall stability and shock-resistance when the front sighting device 100 is used in combination with the scope.

The above-described embodiments of the present application provide a front sighting device 100, which has at least the following features:

Firstly, the infrared image is transmitted through the optical waveguide assembly 20 in the front sighting device 100 by using the optical waveguide technology, which can avoid the setting of eyepiece in the front sighting device 100, thus simplifying the structure, reducing the volume and weight, and optimizing the weight balance.

Secondly, the visible light channel 36 is reserved in the front sight device 100, resulting in a front sight device 100 with a light waveguide and the visible light channel 36 that is based on the dual-light fusion technology and light waveguide technology, so as to enhance the scene and highlight the target, discover more detailed features, and integrate the virtual information and the real scene for mutual complementation and mutual enhancement.

Thirdly, when the front sighting device 100 with the light waveguide and the visible light channel 36 is used in combination with another scope to form a combined sighting system, the light waveguide technology is used to transmit infrared images which are fused with visible light images, so as to achieve a larger angle of view, a larger exit pupil, and a larger eye relief, which makes it possible for the combined sighting system to be applied in more complex application scenarios.

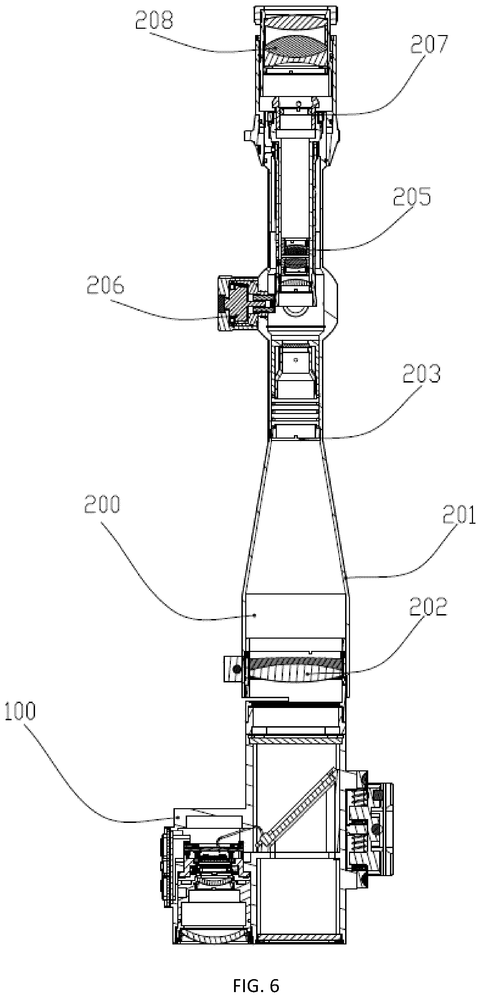

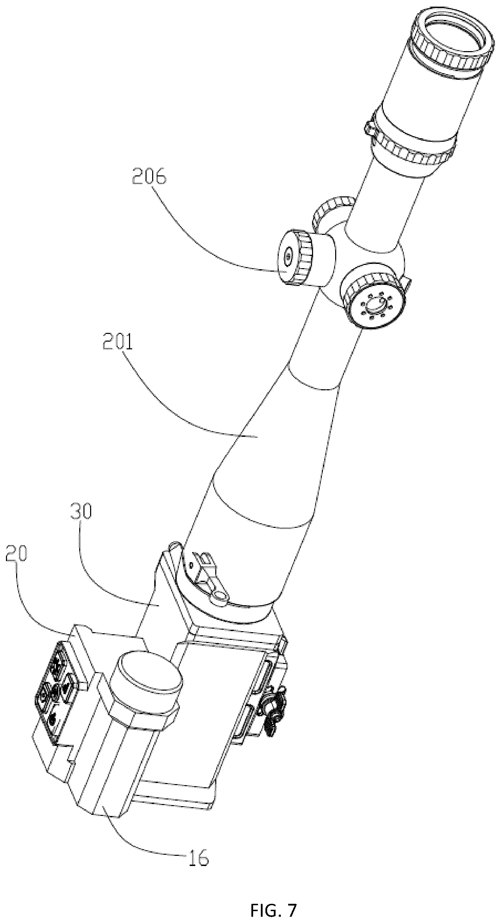

Referring also to FIG. 6 and FIG. 7, in another aspect, an embodiment of the application provides a combined sighting system, including a white-light scope 200 and a front sighting device 100 mounted in the front of the white-light scope 200. The front sighting device 100 can be implemented as the front sighting device 100 described in any one of the previous embodiments of this application. The white light optical axis of the white-light scope 200 is located on the same line as the visible light optical axis of the front sighting device 100. The front sighting device 100 includes an adapter 50 arranged at one end of the housing 30 away from the end where the visible light is incident. The front sighting device 100 is connected through the adapter 50 to one end of the white-light scope 200 where the objective lens is located. Alternatively, the front sighting device 100 includes a shock-absorbing bracket 60 arranged on the side of the housing 30 away from the infrared image assembly 10, and the front sighting device 100 is connected to a standardized connecting piece through the shock-absorbing bracket 60, on the same side of the standardized connecting piece where the white-light scope 200 is connected.

Optionally, the white-light scope 200 includes a main lens barrel 201, and an objective lens group 202, a focusing lens group 203, an image rotation assembly, a reticle assembly 207 and an eyepiece assembly 208, which are arranged in the main lens barrel 201 in sequence along the direction of the white light path. The image rotation assembly includes a zoom lens group 204 and a compensation lens group 205. The zoom lens group 204 is used to move along the white light path to adjust the magnification, and the compensation lens group 205 is used to move along the white light path to adjust the image clarity. A reticle adjustment assembly 206 is provided on a top side of the main lens barrel 201, and the position of the reticle assembly 207 in the main lens barrel 201 can be adjusted by the reticle adjustment assembly 206.

The above description are only specific embodiments of the present invention. However, the scope of protection of the present invention is not limited thereto. Any person skilled in the art can easily conceive variations or substitutions within the technical scope disclosed in the present invention, all of which should be encompassed within the scope of protection of the present invention. The scope of protection of the present invention should be determined according to the appended claims.

## Claims

1. A front sighting device, **characterized by** comprising a housing (30), and an infrared image assembly (10) and an optical waveguide assembly (20) provided in the housing (30), the optical waveguide assembly (20) connected to the infrared image assembly (10);
wherein a visible light channel (36) and an infrared light channel (37) are formed in the housing (30), and the visible light channel (36) and the infrared light channel (37) are parallel to each other;
wherein the infrared image assembly (10) is provided in the infrared light channel (37), when infrared light signals from a target scene enter the infrared light channel (37), the infrared image assembly (10) is configured to receive the infrared light signals, convert the infrared light signals into electrical signals, and send the electrical signals to the optical waveguide assembly (20);
wherein the optical waveguide assembly (20) is located on a transmission path of visible light signals in the visible light channel (36); the optical waveguide assembly (20) is configured to transmit the visible light signals incident into the visible light channel (36) to a rear end of the visible light channel (36), and further receive the electrical signals to form a corresponding infrared image, transmit the infrared image in the form of optical signals within the optical waveguide assembly (20), and finally reflect the infrared image optical signals to the rear end of the visible light channel (36) for fusion with the visible light signals transmitted to the rear end of the visible light channel (36) before entering a human eye.

2. The front sighting device of claim 1, **characterized in that** the optical waveguide assembly (20) comprises an imaging module (23), an optical waveguide substrate (25), and a mirror array (26) provided within the optical waveguide substrate (25), the imaging module (23) configured to receive the electrical signals to form the infrared image;
wherein the optical waveguide substrate (25) is made of an optical waveguide material, comprising a first surface facing an end of the visible light channel where the visible light is incident and a second surface opposite to the first surface; the mirror array (26) comprises a plurality of beam splitters (261) arranged at intervals between the first surface and the second surface, such that when the infrared image enters the optical waveguide substrate (25) in the form of optical signals, the infrared image optical signals are sequentially transmitted by multiple rounds of total reflection between the first surface and the second surface of the optical waveguide substrate (25); wherein, when each beam splitter (261) receives the light from the total reflection, a portion of the light is reflected out of the optical waveguide substrate (25) and emitted from the second surface, and another portion of the light is transmitted to enter a next round of total reflection, until the last beam splitter (261) reflects all the received light out of the optical waveguide substrate (25).

3. The front sighting device of claim 2, **characterized in that** the infrared image assembly (10) comprises an infrared lens (11), a circuit board (122), and an infrared detector (121) provided on the circuit board (122), the infrared lens (11) is configured to collect infrared light signals from the target scene, the infrared detector (121) is configured to receive the infrared light signals and convert them into electrical signals, and the imaging module (23) and the circuit board (122) are connected by a cable.

4. The front sighting device of claim 3, **characterized in that** the infrared image assembly (10) comprises a control panel (13) provided on the housing (30), the control panel (13) and the circuit board (122) are connected by a cable, and the control panel (13) is provided with a plurality of control buttons; and/or,
the infrared image assembly (10) comprises a battery module (16), and the battery module (16) and the circuit board (122) are connected by a cable.

5. The front sighting device of claim 2, **characterized in that** the optical waveguide substrate (25) comprises an optical coupling-in region (251) and an optical coupling-out region (252), the optical waveguide assembly (20) comprises a reflective display module (24) and a coupling-in unit (28) respectively disposed on opposite sides of the optical coupling-in region (251);
the infrared image optical signals enter the optical coupling-in region (251) of the optical waveguide substrate (25) and are incident to the reflective display module (24), the infrared image optical signals are phase-modulated by the reflective display module (24) and then emitted to the coupling-in unit (28), and the infrared image optical signals are coupled to the optical coupling-out region (252) of the optical waveguide substrate (25) by the coupling-in unit (28).

6. The front sighting device of claim 5, **characterized in that** the imaging module (23) and the coupling-in unit (28) are located on the same side of the optical waveguide substrate (25), the projection of the imaging module (23) on the optical coupling-in region (251) is located within the projection of the reflective display module (24) on the optical coupling-in region (251), and the projection of the imaging module (23) on the optical coupling-in region (251) and the projection of the coupling-in unit (28) on the optical coupling-in region (251) are staggered from each other.

7. The front sighting device of claim 5, **characterized in that**, the mirror array (26) is arranged within the optical coupling-out region (252), the beam splitters (261) are arranged at intervals along a transmission direction in which the infrared image light signals are transmitted by the multiple rounds of total reflection in the optical coupling-out region (252), and each beam splitter (261) is obliquely connected between two opposite sides of the optical coupling-out region (252).

8. The front sighting device of claim 1, **characterized in that** the housing (30) comprises a first barrel portion (31) and a second barrel portion (32) for forming the visible light channel (36) therein; the first barrel portion (31) is positioned so that the visible light is incident into the visible light channel (36) via the first barrel portion (31), the optical waveguide assembly (20) is obliquely mounted in the second barrel portion (32), and the second barrel portion (32) is provided with a protective window (40) at one end away from the first barrel portion (31).

9. The front sighting device of claim 8, **characterized in that** the housing (30) comprises an annular flange (33) extending inwards from the junction of the first barrel portion (31) and the second barrel portion (32), the second barrel portion (32) defines a through hole adjacent to the infrared light channel (37), the through hole communicates the visible light channel (36) with the infrared light channel (37), the through hole is provided for a cable connecting the optical waveguide assembly (20) and the infrared image assembly (10) to pass therethrough;
the optical waveguide substrate (25) comprises an end adjacent to the through hole and fixed on the annular flange (33), and another end fixed on a side of the second barrel portion (32) away from the through hole.

10. The front sighting device of claim 9, **characterized in that** the optical waveguide substrate (25) is at 45 degrees to the visible light optical axis.

11. The front sighting device of claim 1, **characterized in that** the front sighting device further comprises an adapter (50), one end of the adapter (50) is connected to the end of the housing (30) away from an end where the visible light is incident, and the other end is provided with an opening for connection to a scope so as to install the front sighting device at a front end of the scope.

12. The front sighting device of claim 11, **characterized in that** the adapter (50) comprises a fixing end (51), a connecting end (52), and an adjustment structure (53) provided on an outer side of the connecting end (52), and a side wall of the connecting end (52) is provided with a slot (521) extending along the axial direction;
the adjustment structure (53) comprises a first engaging part (532), a second engaging part (534), and an adjustment member (535), wherein the first engaging part (532) and the second engaging part (534) are respectively provided at opposite sides of the slot (521), and the adjustment member (535) is adjustably connected between the first engaging part (532) and the second engaging part (534), so as to adjust the width of the slot (521) and thereby adjust the inner diameter of the connecting end (52).

13. The front sighting device of claim 1, **characterized in that** the front sighting device further includes a shock-absorbing bracket (60), the shock-absorbing bracket (60) is provided on a side of the housing (30) away from the infrared image assembly (10), and is configured to install the front sighting device at a front end of a scope.

14. The front sighting device of claim 13, **characterized in that** the shock-absorbing bracket is detachably provided on the housing (30), the shock-absorbing bracket (60) is provided with an elastic member, and the elastic deformation direction of the elastic member is the same as the direction of the visible light optical axis.

15. A combined sighting system, comprising a white-light scope (200) and a front sighting device (100) as described in any of claims 1 to 14, wherein the front sighting device (100) is mounted in front of the white-light scope (200), and a white light optical axis of the white-light scope (200) is located on the same straight line as the visible light optical axis of the front sighting device (100).
